# EUROPEAN PATENT SPECIFICATION

(11) **EP 0 410 580 B1**
(45) Date of publication and mention of the grant of the patent: **30.08.1995**
(21) Application number: 90306899.7
(22) Date of filing: 25.06.1990
(51) Int. Cl.: G21C 17/06, G21C 17/04

(54) **Scanning outer profiles of control rods**
Abtasten der äusseren Oberfläche von Steuerstäben
Examen de la surface extérieure de barres de commande

(30) Priority: 24.07.1989 US 384358
(43) Date of publication of application: 30.01.1991
(73) Proprietor: THE BABCOCK & WILCOX COMPANY, New Orleans, Louisiana 70160 (US)
(72) Inventor: Hancock, Jimmy Wade, Lynchburg, Virginia 24502 (US); Kelly, Michael Johnston, Lynchburg, Virginia 24503 (US); Latham, Wayne Meredith, Lynchburg, Virginia 24503 (US); Stinnett, Carlton Eugene, Lynchburg, Virginia 24502 (US)
(74) Representative: Cotter, Ivan John

(56) References cited:
- EP-A- 0 073 723
- DE-A- 1 900 913
- JP-A-59 163 595
- US-A- 3 455 150
- US-A- 4 404 853
- US-A- 4 597 294
- US-A- 4 718 277

## Description

This invention relates to scanning outer profiles of a plurality of nuclear reactor control rods.

More and more frequently, control rod assemblies (CRA) of pressurised water reactor (PWR) systems are being thought of as components which require periodic non-destructive evaluation (NDE). In the light of recent observations of breach-of-cladding, nuclear power plant owners are under increasing regulatory pressure to determine the condition of their control components and to ensure that shutdown margins are within specifications. Damage mechanisms include vibratory contact with support or guide components and absorber swelling due to neutron irradiation. As a result of either gross diameter increase in the cladding or leaching of the poison from the cladding, the ability to scram the reactor could be jeopardised.

During the operation of a PWR, the control rods are suspended above the fuel assembly with individual pins contained within a brazement guide structure. The tips of the pins are captured in guide tubes located in the fuel assemblies. Coolant flow through the guide tubes causes the pins to vibrate, and the resulting mechanical contact between the control rod pins and the support structure/fuel assembly guide tubes induces localised wear on the outside surfaces of the individual pins. There are at least two different flaw types in the CRA. The first flaw type is a large volume wear mark caused by contact with a guide tube nut. The second type of defect is a small volume, axial groove caused by contact with the brazement support structure above the fuel assembly.

In the past, inspection of control rods, the primary component of rod cluster control assemblies (RCCAs) in pressurised water reactors, has been performed non-destructively, using various eddy current techniques. These eddy current techniques have been used to look for and measure cracks and wear marks that, if large enough, could render an RCCA unusable. The use of eddy current coils has been successful in determining the existence of a breach in cladding or the amount of material left on a control rod. In some situations, measuring the percentage of material remaining has provided sufficient information for determining the usability of a control rod. In fact, pass/fail criteria have largely been based upon the kind of data (i.e. location, quantity and accuracy of data points) collected by eddy current inspection equipment.

Inherent in the making of eddy current measurements and especially in the interpretation of the measurements is the problems of material variability. Because eddy current measurements are based on the electrical properties of the material of which the control rods are made, a control rod calibration standard must be produced to replicate the actual control rod and damage mechanisms as closely as possible. Any different in material or defect geometry has the potential to be a source of error in data collected on actual control rods. If a very precise method of measurement that is not dependent upon material properties could be integrated in a system to inspect control rods, the accuracy of measurement data could be improved.

Patent Specification JP-A-59 163 595 discloses apparatus for detecting the location of a control rod utilising ultrasonic transducer means which are reflected from the surface of the control rod, the transducer means being rotated around the axis of the control rod and translation means being provided to translate the control rod in an axial direction.

Patent Specification US-A-3 455 150 discloses apparatus for inspecting the outer surface of tubing or bars using ultrasonics with rotation and translation with respect to the article being tested.

According to a first aspect of the invention there is provided apparatus for scanning the outer profile of a plurality of nuclear reactor control rods, the apparatus comprising:
ultrasonic transducer means to send an ultrasonic beam to and receive ultrasonic echo energy from the surface of the control rod;
rotation means to rotate the transducer means around the axis of the control rod;
translation means to translate the control rod with respect to the transducer means, in a direction parallel to the axis of the control rod, to scan the surface of the control rod along a helical path;
a module support positioned at a fixed location with respect to the control rod to be scanned, the module support including a guide plate having a configuration of guides corresponding to a configuration of a plurality of control rods in a control rod assembly to be scanned and the translation means comprising drive means to drive the configuration of control rods into the guides of the guide plate; and
a plurality of transducer drive tubes each carrying a separate ultrasonic transducer and distributed in a second configuration to service a selected number of control rods in the first-mentioned configuration, the first-mentioned and second configurations being selected so that with relative rotation between the control rod assembly and the module support, all control rods of the control rod assembly are serviced by the plurality of transducers.

According to a second aspect of the invention there is provided a method of scanning the outer profile of a plurality of nuclear reactor control rods, the method comprising:
rotating an ultrasonic transducer about an axis of a control rod to be scanned;
translating the control rod parallel to its axis and with respect to the transducer to define a helical path which is followed by the transducer over the surface of the control rod;
emitting ultrasonic energy to the surface of the control rod as the transducer rotates and as the control rod is translated with respect to the transducer; and
receiving from the surface of the control rod ultrasonic echo energy which contains information concerning the distance between the transducer and the surface of the control rod which in turn indicates the profile of the surface;
including scanning the plurality of controls rods in a configuration of control rods by means of a plurality of ultrasonic transducers mounted to a module support, each for rotation around the axis of a separate control rod in the configuration, the transducers being distributed in a subconfiguration which is selected so that, with rotation between the control rod configuration and the module support, all control rods can be serviced by the subconfiguration of transducers.

Embodiments of the invention can be used to detect and measuring wear on control rods, and in particular control rods for fuel assemblies for nuclear power plants.

A preferred embodiment of the invention described in detail below provides an ultrasonic non-destructive technique and system that can be used to detect wear on control rods. The system comprises a rotating UT transducer mounting fixture which rests on a storage rack in a spent fuel pool of a nuclear power plant. This fixture houses and rotates a series of transducers while a control rod cluster is run through the fixture. The transducers maintain a constant distance from the control rods at all times as the transducers float to preserve transducer standoff. The system uses high frequency focused transducers, multichannel ultrasonic thickness gauging instrumentation, a probe/electronics switching network, and a calibration standard. A conventional pulse-echo ultrasonic technique is used in conjunction with immersion transducers to measure water path. Taking advantage of the velocity (longitudinal) difference between steel and water, a water path measurement provides profiles of the outside surfaces of the control rods by gauging the spacing between transducer and the test surface. This ultrasonic profilometry system uses the multichannel ultrasonic thickness gauge and multiple test stations to examine several control rods simultaneously. The transducers are rotated continuously around the control rods, maintaining constant spacing between the transducer and the individual control rods. The control rods can be raised and lowered through the inspection fixture by an existing refuelling mast in the plant, effecting a helical scan which provides maximum coverage. Both the pulse voltage and reflected signal are transmitted through slip rings, and the resulting data indicative of rod profile are recorded on a computer-based oscillographic strip chart via an analogue output of the thickness gauge. This ultrasonic technique has advantages over an electromagnetic method for this particular application for several reasons. It is not hindered by variations in the electrical properties of coatings applied to the outside surfaces of the control rods; it is unaffected by the presence of conductive material inside the control rods; and it is not dependent on representative calibration standard flaw geometry for sizing accuracy.

The preferred system can inspect 25% of the rods during one pass of the rod cluster control assembly (RCCA) through the UT transducer mounting fixture. To inspect the remaining rods the RCCA is removed from the fixture and rotated through 90°. The RCCA is then lowered back into the fixture and the rods inspected. This is repeated until all control rods have been inspected.

The entire process is supported by any additional support tooling which, itself, need not form a part of the system.

On-site activities can be performed off the side of the spent fuel pool or off a bridge in the spent fuel pool.

A preferred apparatus for measuring the outer profile of a plurality of control rods of nuclear reactor fuel assemblies, can be used for detecting wear and surface defects and can be simple in design, rugged in construction and economical to manufacture.

The invention will now be further described by way of illustrative and non-limiting example, with reference to the accompanying drawings, in which:
Figure 1 is a side elevational view of an apparatus embodying the invention for scanning and detecting the outer profile of control rods;
Figure 2 is a top plan view taken along a line 2-2 in Figure 1;
Figure 3 is a sectional view taken along a line 3-3 in Figure 1;
Figure 4 is a vertical section view, on an enlarged scale, taken along a line 4-4 in Figure 3;
Figure 5 is a top plan view of a transducer holder of the apparatus; and
Figure 6 is a sectional view taken along a line 6-6 in Figure 5.

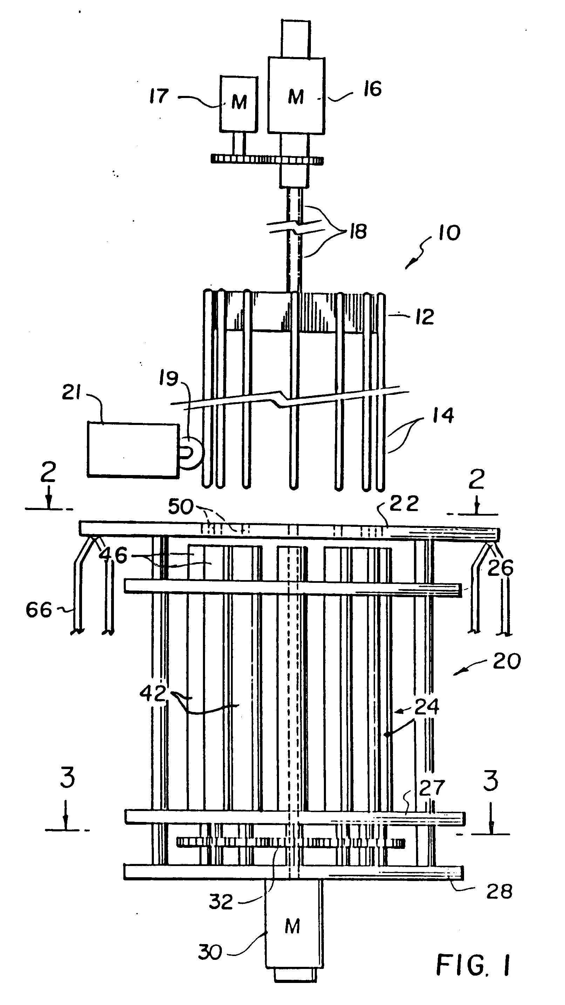

Figure 1 shows an apparatus for scanning and detecting the profile of control rods 14 which are connected by a spider 12 into a control rod assembly 10. As is conventional, the control rod assembly 10 may be driven parallel to the axes of the control rods 14 by a control rod drive unit 16. The control rod drive unit 16 may include a roller assembly which engages a lead screw assembly 18 to move the spider 12 in a direction parallel to the axes of the rods 14.

A rotation driver schematically shown at 17 is also provided for rotating the control rod assembly 10 about the axis of the lead screw 18.

An ultrasonic profilometry assembly 20 is mounted to an assembly support plate 22, which may for example rest upon the top of a spent fuel pool rack in a nuclear power plant shown schematically at 66. A refuelling mast may be used as the assembly drive unit 16 and lead screw 18.

To scan the outer profile of the control rods 14, the control rod assembly 10 is lowered through entry guides 50 in the plate 22 into a set of ultrasonic transducer modules 24 which are mounted to a module support plate 26 carried under the plate 22. As will be explained later, each module 24 contains a rotatably mounted ultrasonic transducer. The ultrasonic transducers in the modules 24 are each rotated by a drive motor 30 mounted to a motor support plate 28 which is carried by an idler support plate 27.

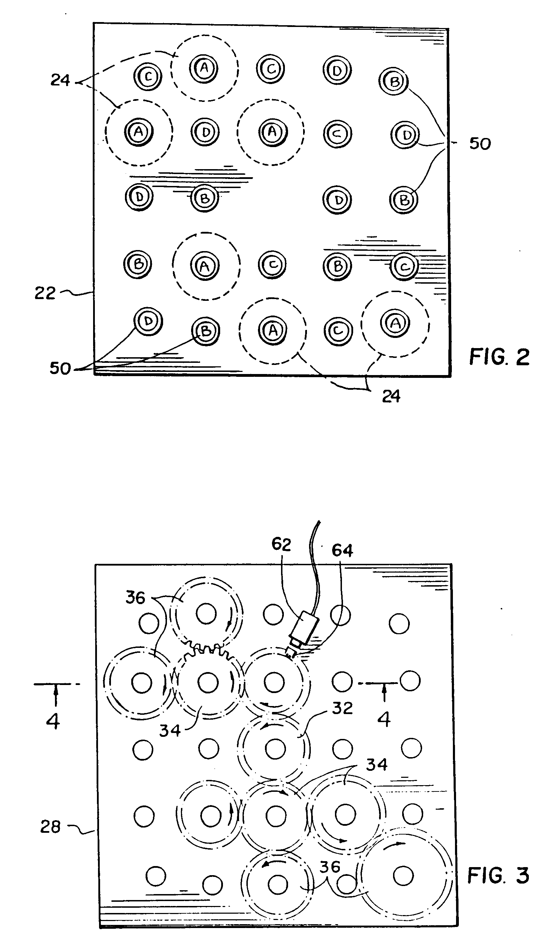

Figure 2 shows the configuration of the entry guides 50 in the plate 22, which corresponds to the configuration of the control rods 14 in the spider 12. Figure 2 shows the positions of six modules 24 which service six control rods at positions A.

When the drive unit 16 lowers the control rods 14 into the plate 22, half of the modules 24 are operated to scan the outer surfaces of the control rods. When the control rods are raised by the drive unit 16, the other half of the modules 24 scan an additional three control rods.

Due to the relative rotation and translation between the transducers and the control rods 14, a helical path on the outer surface of each control rod is scanned. With a rotational speed of 600 rpm, and an axial speed of 25.4 mm (one inch) per second, a helical pitch of 2.54 mm (0.100 inches) is obtained.

The vertical position of the control rod assembly 10 is recorded continuously. This can be achieved, for example, using a wheel 19 (Figure 1) which is connected to an encoder 21 which feeds out the vertical position of the control rod assembly 10 at any point during the process. A release spring can be engaged with the wheel 19 for gently urging it against a control rod 14. Advantageously, two O-rings are connected to the wheel 19 around the circumference thereof and engaged against the control rod 14 to avoid damage to the control rod and to promote tracking by centring the wheel on the control rod. The encoder 21 advantageously may be in the form of a proximity switch which is mounted parallel to the axis of the wheel 19 and which is aimed at holes in the wheel which are circumferentially spaced around the wheel axis. The switch provides a signal to a control computer which can be used in conjunction with the apparatus. Each time a hole passes the switch, a signal is sent to the computer. The distance between each signal corresponds to the linear distance travelled by the control rod assembly 10.

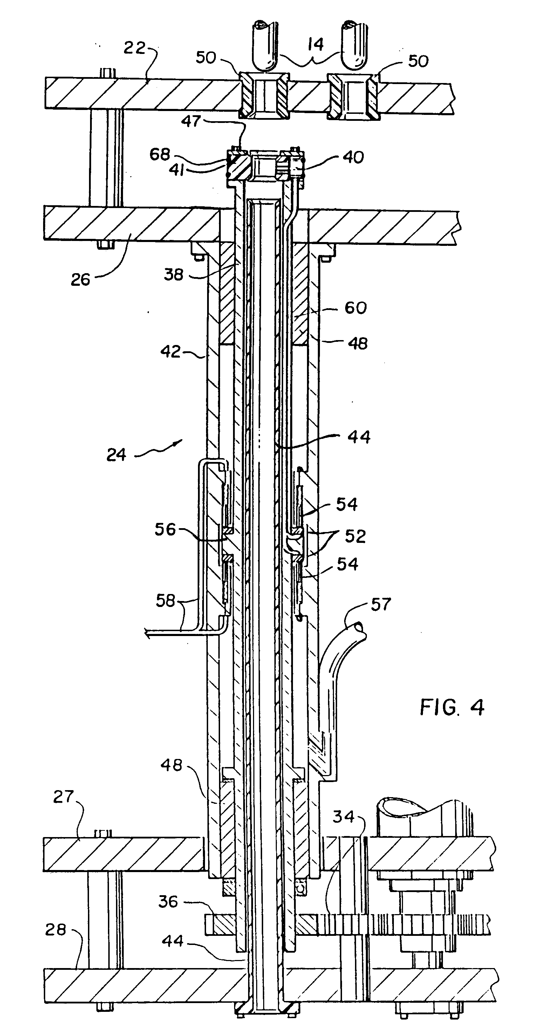

As shown in Figure 4, each transducer module 24 comprises a fixed outer housing 42 which is mounted to the plate 26. A transducer drive tube 38 is mounted between slide bushings 48 that are fixed to the housing 42, for rotation about the axis of one control rod 14.

An ultrasonic transducer 40 is fixed in a transducer holder 41. The transducer holder 41 is slidably mounted to the top of the transducer drive tube 38, and is constrained to move in a plane perpendicular to the axis of the control rod 14. The transducer holder 41 comprises an assemblage of two or more parts, constrained in the axial direction by the top of the transducer drive tube 38 and a cap 47 and in the radial direction by elastic rings 68 to ride on the outside surface of the control rod 14. The capacity of the transducer holder 41 to slide or "float" in a plane perpendicular to the axis of the control rod 14 allows the transducer holder to stay in contact with the control rod without the axis of the transducer drive tube 38 being exactly coincident with the axis of the control rod. The amount of misalignment is governed by clearance in the entry guide 50 and is smaller than the amount of float in the transducer holder mounting.

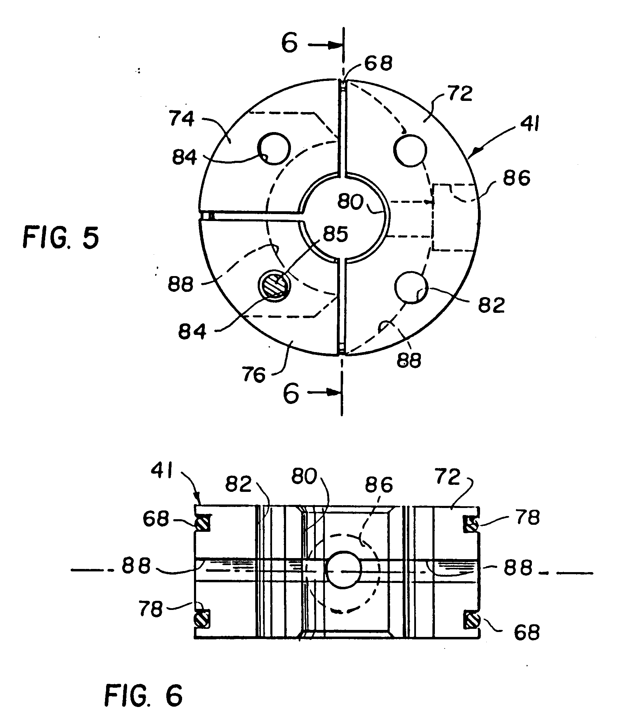

Turning to Figures 5 and 6, the transducer holder 41 is made of three plastics parts 72, 74 and 76 which are originally formed from one generally cylindrical piece of plastics material which is cut into the three parts. The three parts 72, 74 and 76 are held together by O-rings 68 which lie in grooves 78 above and below the axis of symmetry. The O-rings 68 produce a gentle inward clamping against the control rod 14 which is guided within a passage 80 defined at the centre of the holder 41. Two holes 82 are defined in the holder part 72 and one hole 84 is defined in each of the other holder parts 74 and 76. The diameters of the holes 82 and 84 are selected to be approximately 0.760 to 1.02 mm (0.030 to 0.040 inches) larger than the diameter of shoulder bolts 85 to be received by the holes for holding the cap 47 in place over the holder 41. This permits the radial movement of the holder parts 72, 74 and 76, to permit these parts to "float" as the control rod passes with respect to the passage 80. The O-rings 68 exert a gentle clamping force which allows the transducer holder 41 to adjust to changes in the profile of the control rod 14. Not enough pressure is exerted to distort any part of the holder 41 or rod 14 such as to produce false readings.

A blind bore 86 is machined in the part 72 for receiving the body of the transducer 40. The blind bore 86 communicates with an inner groove 88 having a generally C-shaped configuration and passing through each of the parts 72, 74 and 76 of the holder 41. The groove 88 is important as it provides a water path between the ultrasonic transducer 40 and the control rod 14 being inspected. Experiments indicate that, under the experimental conditions, the illustrated arrangement operates correctly with the groove 88 but does not operate correctly without the groove. It is believed that the groove 88 prevents cavitation created when the transducer 40 is rotated around the control rod 14 at 600 rpm.

In addition to the plastics holder 41, an inner guide sleeve 44 and the guide 50 may also be made of plastics material to withstand the environment and to avoid any contact between the control, rods 14 and metal.

The inner guide sleeve 44, which is fixed to the motor support plate 28 and extends into the centre of the drive tube 38, further helps centre the control rod 14 within the transducer module 24.

Good results have been achieved by utilising a 20 MHz spherically focussed transducer 40 with a focal length of 6.35 mm (0.25 inches). The beam diameter at the focal point of the transducer 40 is approximately 0.254 mm (0.010 inches), which allows for the detection of very narrow flaws in the outer surfaces of the control rods 14. A precision ultrasonic thickness gauge (not shown) is used in conjunction with each transducer 40. A signal from each transducer is gated and any change in position of this signal caused by a wear mark is seen as a change of voltage from the (analogue) output of the gauge. Data from each thickness gauge is acquired at 1,200 Hz by a computer-based oscillographic data acquisition system which provides a real time display of the output for each thickness gauge, and data storage on a computer hard disc.

An ultrasonic transducer 40 which has been used to practice the present invention is the Panametrics Part No. V3527. A Panametrics Part No. 5215-BW1 Ultrasonic Thickness Gauge has been used in conjunction with the Panametrics transducer. The thickness gauge has been modified to extends its bandwidth to include a frequency response up to 30 MHz, to provide better compatibility with the 20 MHz transducer. The three transducers which are used in the three modules of the apparatus simultaneously are also synchronised with one transducer acting as a master and the other two acting as slaves, in order to synchronise pulses and avoid crosstalk.

The foregoing is useful, for example, to determine whether large volume wear marks caused by contact with a guide tube nut, or small volume defects such as axial grooves caused by contact with a brazement support structure above the fuel assembly, are present. The skilled artisan will understand that a broad range of sonic frequencies can be utilised depending on the type of defect being measured. Typically, for the type of defects specified above, a range of 10 to 30 MHz would be reasonable.

The systems's circumferential resolution of 0.254 mm (0.010 inches) is equal to 120 data points per transducer revolution or 1,200 data points per second, per rod. A hard disc has sufficient capacity to store the data from the inspection of at least two complete RCCAs (48 rods) with 100% inspection. After inspection, the data acquired is transferred to a streaming tape or other form of permanent storage.

In order to scan all rods in a control rod assembly 10, after two linear passes of the control rod assembly which detects a profile of the rods shown at the positions A in Figure 2, the assembly is withdrawn from the plate 22 and rotated by the rotation driver 17 through 90°. This brings a new set of six control rods into positions shown at B in Figure 2, into alignment with the six modules 24.

This operation can be repeated by rotating the assembly through another 90° to scan rods in positions C. A further rotation of 90° for the control rod assembly 10 brings rods into positions D, into place for scanning. In this way, all rods in a single control rod assembly can be scanned by the single set of six modules. Other configurations for the control rods and modules can be utilised.

Turning now to Figure 3, all six transducers 40 and the six modules 24 can be rotated using the single drive motor 30, which is connected to a drive spur gear 32. The spur gear 32 is engaged with a combination of idler gears 34 and module gears 36. Each module gear 36 is connected to its own transducer drive tube 38 as shown in Figure 4. In this way, all of the transducers 40 can be rotated at the same time.

To establish a correlation between the data points and the circumferential position of each transducer 40, a further proximity switch 62 is mounted on the plate 28 and cooperates with a pin 64 on one of the gears 36. This provides a signal upon each complete revolution of the transducers 40, to establish a reference position for the transducers.

The transducers 40 are submerged in water so that a water path measurement is obtained using the ultrasonic transducers.

The drive motor 30 advantageously may be a submersible DC motor. Alternatively, motors of other types, such as miniature air motors, may be used. Further, transmission means other than spur gears, such as stainless steel chains or the like, may be utilised.

To transmit the signal from the transducer 40 of each module 24 to external instrumentation, a pair of wires 60 is connected between the transducer 40 and a pair of slip rings 52 which are mounted on an electrically insulated collar 56 fixed to the drive tube 38. Spring loaded brushes 54 mounted to the fixed outer housing 42 are connected to wires 58 for conveying the signal away from each module 24.

A supply of water can be provided to the interior of each module 24, for insulation or flushing, through a conduit 57.

The slip ring assembly should be operated in a non-conductive environment. Because the spent fuel pool water can be conductive, the slip ring assembly can be insulated from the pool water by deionised water supplied through the conduit 57. A continuous supply of water through the conduit 57 at increased pressure excludes pool water from the slip ring assembly.

Advantages of the above-described arrangement include the fact that the ultrasonic system is highly sensitive and accurate for small volume defects, particularly when compared to previous eddy current methods. The present arrangement is inherently able to provide better profilometry information than an eddy current system because of the large number of points measured upon each revolution of the transducer. With better profilometry data, a better assessment of control rod wear, and the mechanisms for causing such wear, can be made. The arrangement does not depend on representative calibration standard flaw geometry for accurate depth estimation as in the eddy current method, because absolute wear depth is measured as a change in water path. The system is also not encumbered by material property variations, variations in cladding thickness, or conductivity variations in the cladding material. In addition, the measurements are not affected by the presence of conductive absorber materials such as silver-indium-cadmium, or hafnium.

## Claims

1. Apparatus for scanning the outer profile of a plurality of nuclear reactor control rods, the apparatus comprising:
ultrasonic transducer means (40) to send an ultrasonic beam to and receive ultrasonic echo energy from the surface of the control rod (14);
rotation means (30, 32, 34, 36) to rotate the transducer means (40) around the axis of the control rod (14);
translation means (16) to translate the control rod (14) with respect to the transducer means (40), in a direction parallel to the axis of the control rod, to scan the surface of the control rod along a helical path;
a module support (22, 26, 28) positioned at a fixed location with respect to the control rod (14) to be scanned, the module support (22, 26, 28) including a guide plate (22) having a configuration of guides (50) corresponding to a configuration of a plurality of control rods (14) in a control rod assembly (10) to be scanned and the translation means (16) comprising drive means to drive the configuration of control rods (14) into the guides (50) of the guide plate (22); and
a plurality of transducer drive tubes (38) each carrying a separate ultrasonic transducer (40) and distributed in a second configuration to service a selected number of control rods in the first-mentioned configuration, the first-mentioned and second configurations being selected so that with relative rotation between the control rod assembly (10) and the module support (22, 26, 28), all control rods of the control rod assembly (10) are serviced by the plurality of transducers (40).

2. Apparatus according to claim 1, wherein each transducer drive tube (38) is mounted for rotation about the axis of the respective control rod, to receive a control rod therein, the transducer means (40) comprises an ultrasonic transducer connected to the transducer drive tube (38) and facing an interior of the transducer drive tube, and the rotation means (30, 32, 34, 36) is mounted to the module support (22, 26, 28) and engaged with the transducer drive tube (38) to rotate the transducer drive tube.

3. Apparatus according to claim 2, wherein the rotation means (30, 32, 34, 36) comprises a motor (30) connected to the module support (22, 26, 28) and a drive transmission (32, 34, 36) operatively connected between the motor (30) and the transducer drive tube (38) to rotate the transducer drive tube.

4. Apparatus according to any one of claims 1 to 3, wherein the module support (22, 26, 28) comprises a pair of spaced apart plates (26, 28), a fixed housing (42) connecting between the pair of plates (26, 28) to contain the transducer drive tube (38), and slip ring means (52) connected to the transducer (40) and operatively connected between the transducer support tube (38) and the fixed housing (42) to transmit signals to and from the transducer (40) from outside the fixed housing (42).

5. Apparatus according to any one of claims 1 to 3, wherein the module support (22, 26, 28) includes a mounting plate (28) and a control rod guide tube (44) connected to the mounting plate (28) and extending axially in the transducer drive tube (38) to guide a control rod (14) in the transducer drive tube.

6. Apparatus according to any one of claims 2 to 5, including a transducer holder (41) connected to the transducer drive tube (38) and carrying the transducer (40), the transducer holder (41) having at least one part (72, 74, 76) to carry the transducer (40) and mounted for limited radial movement with respect to the transducer drive tube (38).

7. Apparatus according to claim 6, including a passage (80) defined through the transducer holder (41) having a diameter so as closely to receive the control rod (14) therethrough.

8. Apparatus according to claim 7, including a groove (88) defined in the transducer holder (41) to receive water, the transducer (40) having a sensing end communicating with the groove (88).

9. Apparatus according to claim 8, wherein the transducer holder (41) is generally cylindrical in shape and comprises a first part (72) to carry the transducer (40) and to carry one side of the passage (80) and at least one additional part (74, 76) to carry an additional side of the passage (80).

10. Apparatus according to claim 9, including resilient ring means (68) engaged around said parts (72, 74, 76) of the transducer holder (41) resiliently to hold the passage (80) against the control rod (14).

11. A method of scanning the outer profile of a plurality of nuclear reactor control rods, the method comprising:
rotating an ultrasonic transducer (40) about an axis of a control rod (14) to be scanned;
translating the control rod (14) parallel to its axis and with respect to the transducer (40) to define a helical path which is followed by the transducer over the surface of the control rod;
emitting ultrasonic energy to the surface of the control rod (14) as the transducer (40) rotates and as the control rod is translated with respect to the transducer; and
receiving from the surface of the control rod ultrasonic echo energy which contains information concerning the distance between the transducer and the surface of the control rod which in turn indicates the profile of the surface;
including scanning the plurality of controls rods (14) in a configuration of control rods by means of a plurality of ultrasonic transducers (40) mounted to a module support, each for rotation around the axis of a separate control rod in the configuration, the transducers being distributed in a subconfiguration which is selected so that, with rotation between the control rod configuration and the module support, all control rods can be serviced by the subconfiguration of transducers.

12. A method according to claim 11, wherein each ultrasonic transducer (40) is carried on a holder (41) having a passage (80) to receive a control rod (14), and the holder (41) is resiliently urged against the control rod to centre the holder with respect to the control rod.

## Patentansprüche

1. Vorrichtung zum Abtasten des Außenprofils mehrerer Kernreaktorsteuerstäbe mit
einer Ultraschallwandlereinrichtung (40), um einen Ultraschallstrahl zu der Oberfläche des Steuerstabes (14) zu schicken und von dieser Ultraschallechoenergie zu empfangen,
einer Rotationseinrichtung (30, 32, 34, 36), um die Wandlereinrichtung (40) um die Achse des Steuerstabes (14) rotieren zu lassen,
Übertragungseinrichtungen (16), um den Steuerstab (14) in bezug auf die Wandlereinrichtung (40) in einer Richtung parallel zu der Achse des Steuerstabes zu übertragen und so die Oberfläche des Steuerstabes entlang einem Spiralweg abzutasten,
einem Modulträger (22, 26, 28), der in einer ortsfesten Stellung in bezug auf den abzutastenden Steuerstab (14) angeordnet ist, wobei der Modulträger (22, 26, 28) eine Führungsplatte (22) mit einer Anordnung von Führungen (50) entsprechend einer Anordnung mehrerer abzutastender Steuerstäbe (14) in einer Steuerstabanordnung (10) einschließt und die Übertragungseinrichtungen (16) Anstriebseinrichtungen umfassen, um die Steuerstabanordnung (14) in die Führungen (50) der Führungsplatte (22) zu steuern, und
mehreren Wandlerantriebsrohren (38), von denen jedes einen getrennten Ultraschallwandler (40) trägt und in einer zweiten Anordnung verteilt ist, um eine ausgewählte Anzahl von Steuerstäben in der ersterwähnten Anordnung zu bedienen, wobei die ersterwähnten und zweiten Anordnungen so ausgewählt sind, daß mit Relativrotation zwischen der Steuerstabanordnung (10) und dem Modulträger (22, 26, 28) alle Steuerstäbe der Steuerstabanordnung (10) durch die mehreren Wandler (40) bedient werden.

2. Vorrichtung nach Anspruch 1, bei der jedes Wandlerantriebsrohr (38) für eine Rotation um die Achse des betreffenden Steuerstabes befestigt ist, um darin einen Steuerstab aufzunehmen, die Wandlereinrichtung (40) einen Ultraschallwandler umfaßt, der mit dem Wandlerantriebsrohr (38) verbunden ist und zu einem Inneren des Wandlerantriebsrohres hinblickt, und die Rotationseinrichtung (30, 32, 34, 36) an dem Modulträger (22, 26, 28) befestigt ist und in das Wandlerantriebsrohr (38) eingreift, um das Wandlerantriebsrohr rotieren zu lassen.

3. Vorrichtung nach Anspruch 2, bei der die Rotationseinrichtung (30, 32, 34, 36) einen Motor (30), der mit dem Modulträger (22, 26, 28) verbunden ist, und eine Antriebsübertragung (32, 34, 36), die wirkungsmäßig eine Verbindung zwischen dem Motor (30) und dem Wandlerantriebsrohr (38) herstellt, um das Wandlerantriebsrohr rotieren zu lassen, umfaßt.

4. Vorrichtung nach einem der Ansprüche 1 bis 3, bei der der Modulträger (22, 26, 28) ein Paar voneinander beabstandeter Platten (26, 28), ein ortsfestes Gehäuse (42), das das Plattenpaar (26, 28) verbindet, um das Wandlerantriebsrohr (38) zu enthalten, und eine Schleifringeinrichtung (52) umfaßt, die mit dem Wandler (40) verbunden ist und wirkungsmäßig das Wandlerstützrohr (38) und das ortsfeste Gehäuse (42) verbindet, um Signale zu und von dem Wandler (40) von außerhalb des ortsfesten Gehäuses (42) zu übertragen.

5. Vorrichtung nach einem der Ansprüche 1 bis 3, bei der der Modulträger (22, 26, 28) eine Befestigungsplatte (28) und ein Steuerstabführungsrohr (44), das mit der Befestigungsplatte (28) verbunden ist und sich axial in dem Wandlerantriebsrohr (38) erstreckt, um einen Steuerstab (14) in dem Wandlerantriebsrohr zu führen, einschließt.

6. Vorrichtung nach einem der Ansprüche 2 bis 5 mit einem Wandlerhalter (41), der mit dem Wandlerantriebsrohr (38) verbunden ist und den Wandler (40) trägt, wobei der Wandlerhalter (41) wenigstens ein Teil (72, 74, 76) hat, um den Wandler (40) zu tragen, und für begrenzte Radialbewegung in bezug auf das Wandlerantriebsrohr (38) befestigt ist.

7. Vorrichtung nach Anspruch 6 mit einem Durchgang (80) durch den Wandlerhalter (41) mit einem solchen Durchmesser, daß er den Steuerstab (14) eng aufnimmt.

8. Vorrichtung nach Anspruch 7 mit einer Nut (88) in dem Wandlerhalter (41), um Wasser aufzunehmen, wobei der Wandler (40) ein mit der Nut (88) in Verbindung stehendes Abfühlende besitzt.

9. Vorrichtung nach Anspruch 8, in welcher der Wandlerhalter (41) allgemein zylindrische Form hat und ein erstes Teil (72), um den Wandler (40) zu tragen und eine Seite des Durchgangs (80) zu tragen, und wenigstens ein weiteres Teil (74, 76), um eine weitere Seite des Durchganges (80) zu tragen, umfaßt.

10. Vorrichtung nach Anspruch 9 mit einer elastischen Ringeinrichtung (68), die die Teile (72, 74, 76) des Wandlerhalters (41) elastisch umgreift, um den Durchgang (80) gegen den Steuerstab (14) zu halten.

11. Verfahren zum Abtasten des Außenprofils mehrerer Kernreaktorsteuerstäbe, bei dem man
einen Ultraschallwandler (40) um eine Achse eines abzutastenden Steuerstabes (14) rotieren läßt,
den Steuerstab (14) parallel zu seiner Achse und in bezug auf den Wandler (40) überträgt, um einen Spiralweg zu definieren, welcher von dem Wandler über der Oberfläche des Steuerstabes befolgt wird,
Ultraschallenergie zu der Oberfläche des Steuerstabes (14) emittiert, während der Wandler (40) rotiert und der Steuerstab in bezug auf den Wandler übertragen wird, und
von der Oberfläche des Steuerstabes Ultraschallechoenergie empfängt, die Information bezüglich des Abstandes zwischen dem Wandler und der Oberfläche des Steuerstabes enthält, welche ihrerseits das Profil der Oberfläche anzeigt,
einschließlich einer Abtastung der mehreren Steuerstäbe (14) in einer Steuerstabanordnung mit Hilfe mehrerer Ultraschallwandler (40), die an einem Modulträger jeweils für eine Rotation um die Achse eines getrennten Steuerstabes in der Anordnung befestigt sind, wobei die Wandler in einer Unteranordnung verteilt sind, die so ausgewählt ist, daß mit der Rotation zwischen der Steuerstabanordnung und dem Modulträger alle Steuerstäbe durch die Unteranordnung von Wandler bedient werden können.

12. Verfahren nach Anspruch 11, bei dem jeder Ultraschallwandler (40) auf einem Halter (41) mit einem Durchgang (80) getragen ist, um einen Steuerstab (14) aufzunehmen und der Halter (41) elastisch gegen den Steuerstab gedrückt wird, um den Halter in bezug auf den Steuerstab zu zentrieren.

## Revendications

1. Appareil pour examiner le profil extérieur de plusieurs barres de commande de réacteur nucléaire, l'appareil comprenant :
un moyen transducteur à ultrasons (40) pour envoyer un faisceau d'ultrasons vers la surface de la barre de commande (14) et pour en recevoir l'énergie ultrasonore d'écho ;
un moyen de rotation (30, 32, 34, 36) pour faire tourner le moyen transducteur (40) autour de l'axe de la barre de commande (14) ;
un moyen de translation (16) pour translater la barre de commande (14) par rapport au moyen transducteur (40), dans une direction parallèle à l'axe de la barre de commande, pour examiner la surface de la barre de commande suivant un trajet en hélice ;
un support de modules (22, 26, 28) placé dans un emplacement fixe par rapport à la barre de commande (14) à examiner, le support de modules (22, 26, 28) comprenant une plaque de guidage (22) ayant une configuration de guides (50) correspondant à la configuration de plusieurs barres de commande (14) dans un assemblage de barres de commande (10) à examiner, et le moyen de translation (16) comprenant un moyen d'entraînement pour entraîner la configuration de barres de commande (14) dans les guides (50) de la plaque de guidage (22) ; et
plusieurs tubes d'entraînement de transducteur (38) chacun portant un transducteur à ultrasons (40) distinct et répartis suivant une seconde configuration pour prendre en charge un nombre sélectionné de barres de commande de la première configuration mentionnée, les première et seconde configurations étant choisies de telle façon que toutes les barres de commande de l'assemblage de barres de commande (10) soient prises en charge par les transducteurs (40) par la rotation relative entre l'assemblage de barres de commande (10) et le support de modules (22, 26, 28).

2. Appareil selon la revendication 1, dans lequel chaque tube d'entraînement de transducteur (38) est monté pour rotation autour de l'axe de la barre de commande respective, pour y recevoir une barre de commande ; dans lequel le moyen transducteur (40) comprend un transducteur à ultrasons relié au tube d'entraînement de transducteur (38) et faisant face à l'intérieur du tube d'entraînement de transducteur ; et dans lequel le moyen de rotation (30, 32, 34, 36) est monté sur le support de modules (22, 26, 28) et en prise avec le tube d'entraînement de transducteur (38) pour faire tourner le tube d'entraînement de transducteur.

3. Appareil selon la revendication 2, dans lequel le moyen de rotation (30, 32, 34 36) comprend un moteur (30) relié au support de modules (22, 26, 28) et une transmission d'entraînement (32, 34, 36) reliant de manière fonctionnelle le moteur (30) et le tube d'entraînement de transducteur (38) pour faire tourner le tube d'entraînement de transducteur.

4. Appareil selon l'une quelconque des revendications 1 à 3, dans lequel le support de modules (22, 26, 28) comprend une paire de plaques espacées (26, 28), un boîtier fixe (42) reliant la paire de plaques (26, 28) pour contenir le tube d'entraînement de transducteur (38), et un moyen formant contacts tournants (52) relié au transducteur (40) et reliant de manière fonctionnelle le tube support de transducteur (38) et le boîtier fixe (42) pour transmettre, depuis l'extérieur du boîtier fixe (42), des signaux vers le transducteur (40) et à partir de celui-ci.

5. Appareil selon l'une quelconque des revendications 1 à 3, dans lequel le support de modules (22, 26, 28) comprend une plaque de montage (28) et un tube de guidage de barre de commande (44) relié à la plaque de montage (28) et s'étendant axialement dans le tube d'entraînement de transducteur (38) pour guider une barre de commande (14) dans le tube d'entraînement de transducteur.

6. Appareil selon les revendications 2 à 5, incluant un support de transducteur (41) relié au tube d'entraînement de transducteur (38) et portant le transducteur (40), le support de transducteur (41) comportant au moins une pièce (72, 74, 76) pour porter le transducteur (40) et étant monté pour limiter le déplacement radial par rapport au tube d'entraînement de transducteur (38).

7. Appareil selon la revendication 6, incluant un conduit (80) défini dans le support de transducteur (41) ayant un diamètre propre à recevoir la barre de commande (14).

8. Appareil selon la revendication 7, incluant une rainure (88) définie dans le support de transducteur (41) pour recevoir de l'eau, le transducteur (40) ayant une extrémité de détection communiquant avec la rainure (88).

9. Appareil selon la revendication 8, dans lequel le support de transducteur (41) est de forme globalement cylindrique et comprend une première pièce (72) pour porter le transducteur (40) et pour porter un côté du conduit (80), et au moins une autre pièce (74, 76) pour porter un autre côté du conduit (80).

10. Appareil selon la revendication 9, incluant un moyen formant bague élastique (68) en prise autour desdites pièces (72, 74, 76) du support de transducteur (41) pour maintenir de façon élastique le conduit (80) contre la barre de commande (14).

11. Procédé d'examen du profil extérieur de plusieurs barres de commande de réacteur nucléaire, le procédé comprenant :
la rotation d'un transducteur à ultrasons (40) autour d'un axe d'une barre de commande (14) à examiner ;
la translation de la barre de commande (14) parallèlement à son axe et par rapport au transducteur (40) pour définir un trajet en hélice qui est suivi par le transducteur sur la surface de la barre de commande ;
l'émission d'énergie ultrasonore vers la surface de la barre de commande (14) pendant que le transducteur (40) tourne et que la barre de commande est translatée par rapport au transducteur ; et
la réception de l'énergie ultrasonore d'écho, provenant de la surface de la barre de commande, qui contient de l'information concernant la distance entre le transducteur et la surface de la barre de commande qui, à son tour, indique le profil de la surface ;
incluant l'examen des barres de commande (14) d'une configuration de barres de commande à l'aide de plusieurs transducteurs à ultrasons (40) montés sur un support de modules, chacun pour rotation autour de l'axe d'une barre de commande distincte de la configuration, les transducteurs étant répartis suivant une sous-configuration qui est choisie de telle manière que toutes les barres de commande puissent être prises en charge par la sous-configuration de transducteurs, par la rotation entre la configuration de barres de commande et le support de modules.

12. Procédé selon la revendication 11, dans lequel chaque transducteur à ultrasons (40) est porté par un support (41) comportant un conduit (80) pour recevoir une barre de commande (14) ; et dans lequel le support (41) est poussé de manière élastique contre la barre de commande pour centrer le support par rapport à la barre de commande.
